# EUROPÄISCHE PATENTSCHRIFT

(11) **EP 2 608 985 B1**
(45) Veröffentlichungstag und Bekanntmachung des Hinweises auf die Patenterteilung: **26.11.2014**
(21) Anmeldenummer: 12780416.9
(22) Anmeldetag: 12.10.2012
(51) Int. Cl.: B60N 2/20, F16F 1/373, F16F 7/08

(54) **ROTATIONSBREMSVORRICHTUNG UND VERWENDUNG EINER ROTATIONSBREMSVORRICHTUNG IN DER KFZ-INDUSTRIE**
ROTATION BRAKING APPARATUS AND USE OF A ROTATION BRAKING APPARATUS IN THE MOTOR VEHICLE INDUSTRY
DISPOSITIF DE FREINAGE À ROTATION ET UTILISATION D'UN DISPOSITIF DE FREINAGE À ROTATION DANS L'INDUSTRIE AUTOMOBILE

(30) Priorität: 19.10.2011 DE 202011106896 U
(43) Veröffentlichungstag der Anmeldung: 03.07.2013
(73) Patentinhaber: Ace Stoßdämpfer Gmbh, 40764 Langenfeld (DE)
(72) Erfinder: AREND, Jürgen, D-42699 Solingen (DE); TAPKEN, Heiner, D-42697 Solingen (DE)
(74) Vertreter: Beyer, Rudi
(86) Internationale Anmeldenummer: PCT/EP2012/004277
(87) Internationale Veröffentlichungsnummer: WO 2013/056801

(56) Entgegenhaltungen:
- EP-A1- 1 947 370
- DE-B- 1 027 940
- US-A- 3 012 767

## Beschreibung

### Gattung

Die Erfindung betrifft eine Rotationsbremsvorrichtung.

Des Weiteren betrifft die Erfindung die Verwendung einer Rotationsbremsvorrichtung in der Kfz-Industrie.

### Stand der Technik

Insbesondere bei Pkws ist es bekannt, dass Rückenlehnen zur Vergrößerung der Ladefläche oder des Kofferraums von einer aufrechten Position in eine waagerechte oder annähernd waagerechte Position heruntergeschwenkt werden können. Dabei ergibt sich oftmals der Nachteil, dass beim Entriegeln der betreffenden Rückenlehne diese schlagartig nach unten fällt. Besonders unangenehm, manchmal sogar gefährlich, ist dies, wenn das Entriegeln der Rückenlehne, zum Beispiel durch spielende Kinder, also unbeabsichtigt erfolgt. Dann kann die auf dem Sitz befindliche Person nicht nur einen unerwartet heftigen Schlag in den Rücken bekommen, sondern kleine Kinder oder Tiere, die sich auf dem Sitz befinden, können durch das plötzliche Herunterfallen der Rückenlehne sogar verletzt werden. Bei einigen vorbekannten Bauarten weisen Rückenlehnen eine Nackenstütze auf, die sich bei einem unkontrollierten Herunterfallen an der Rückenlehne des Vordersitzes keilartig festklemmen können, insbesondere dann, wenn der betreffende Sitz durch eine größere Person weit nach hinten geschoben ist. Dann bereitet es einige Mühe, den Sitz wieder in die aufrechte Lage zu schwenken, zumeist musst der Vordersitz zunächst nach vorne gefahren werden, bevor dann die Rückenlehne nach oben oder unten geschwenkt werden kann.

Eine wie oben erwähnte Rotationsbremsvorrichtung ist durch die US 3012767 bekannt.

### Aufgabe

Der Erfindung liegt die Aufgabe zugrunde, eine Rotationsbremsvorrichtung zu schaffen, die ein kontrolliertes Absenken einer Last, zum Beispiel einer Rückenlehne eines Pkw, verhindertund dadurch die vorbeschriebenen Nachteile vermeidet.

Des Weiteren liegt der Erfindung die Aufgabe zugrunde, eine vorteilhafte erfinderische Verwendung für eine derartige Rotationsbremsvorrichtung vorzuschlagen.

### Lösung

Die Aufgabe wird durch die in **Patentanspruch 1** wiedergegebenen Merkmale gelöst.

### Einige Vorteile

Durch die erfindungsgemäße Rotationsbremse wird sichergestellt, dass an ihr befestigte Lasten, zum Beispiel eine Rückenlehne, kontrolliert geschwenkt/gedreht werden können. Das hakenförmige Bremselement wird hierbei von dem betreffenden Brems- und Dämpfungshebel federelastisch verformt und gestreckt. Die hierbei gespeicherte Federkraft wird beim Zurückschwenken der betreffenden Masse wieder dazu verwendet, um zum Beispiel nach dem Entriegeln der Masse, insbesondere einer Rückenlehne, die entgegengesetzte Schwenkbewegung einzuleiten.

### Weitere erfinderische Ausgestaltungen

Weitere erfinderische Ausgestaltungen sind in den **Patentansprüchen 2** bis **15** beschrieben.

Bei der Ausgestaltung gemäß **Patentanspruch 2** sind im Gehäuse zwei Brems- und Dämpfungselemente angeordnet, die aus einem federelastische Eigenschaften aufweisenden Werkstoff bestehen. Die flügelartigen, der Achse zugeordneten Brems- und Dämpfungshebel greifen jeweils hinter den betreffenden hakenförmigen Längenabschnitt des betreffenden Brems- und Dämpfungselementes, so dass bei einer Drehbewegung die hakenförmigen Längsabschnitte verformt werden, was eine entsprechende Dämpfungs- und Bremswirkung zur Folge hat. Je nach dem gewählten Material, der Dicke und der Höhe der Brems- und Dämpfungselemente ergibt sich ein entsprechend hohes federelastisches Rückstellmoment, das auf die flügelartigen Brems- und Dämpfungshebel ausgeübt wird und auf die Achse übertragen wird, mit der ein entsprechendes Bauteil, zum Beispiel die Rückenlehne eines Pkws, gekuppelt ist, deren Bewegung beim Herabschwenken dann entsprechend der Rückstellwirkung der hakenförmigen Brems- und Dämpfungselemente sanft abgebremst wird.

Die Ausführungsform nach **Patentanspruch 3** weist hakenförmige Brems- und Dämpfungselemente auf, die mit einem gewissen, länglichen, kurvenförmigen Längenabschnitt entsprechend dem Verlauf der Innenseite des rohrförmigen Gehäuses ausgebildet sind und sich an der Innenseite bevorzugt abstützen, zum Beispiel mit dieser fest, durch Kleben, Schrauben oder Klemmen, verbunden sein können, so dass sie unverrückbar im Gehäuse angeordnet sind.

Gemäß **Patentanspruch 4** ist das Gehäuse auch an seiner Außenseite zylindrisch verlaufend ausgebildet, also rohrförmig gestaltet. Die Längsachse verläuft koaxial zur Längsachse des Gehäuses - **Patentanspruch 5**.

Wird eine Ausführungsform nach **Patentanspruch 6** gewählt, ergibt sich nicht nur eine raumsparende Konstruktion, sondern auch die Anordnung und Ausbildung von hakenförmigen Brems- und Dämpfungselementen, die je nach der Form und der zu bremsenden Masse, zum Beispiel je nach Form und Schwere und Größe einer Rückenlehne in einem Kfz, ausgestaltet sein können. Da die hakenförmigen Längenabschnitte der Brems- und Dämpfungselemente in einem gewissen Abstand von der Drehachse enden, bleibt in der Mitte des Gehäuses genügend Platz, um die flügelartigen Brems- und Dämpfungshebel mit einem hülsenförmigen Teil auf der Drehachse anzuordnen und getrieblich zu verbinden. Außerdem können die hakenförmigen Längenabschnitte so weit in den Innenraum des rohrförmigen Gehäuses hineinragen, dass die Brems- und Dämpfungshebel mit einem relativ großen Längenabschnitt diese hakenförmigen, gegeneinander gerichteten Längenabschnitte hintergreifen können, außerdem die der Drehachse zugekehrten Innenseite der übrigen Längenabschnitte der Bremselemente berühren, so dass auch zwischen den abgewandten Stirnseiten der Brems- und Dämpfungshebel Kraftschluss zu den Bremselementen besteht. Dadurch erfolgt nicht nur eine Bremswirkung durch das Aufbiegen oder Strecken der hakenförmigen Längsabschnitte der Brems- und Dämpfungselemente, sondern auch durch den Kraftschluss zwischen den Stirnseiten der Bremshebel und den diesen zugewandten Seitenwände der Bremselemente selbst. Auf der anderen Seite unterstützen die gestreckten hakenförmigen Längenabschnitte das Zurückschwenken und Entriegeln der betreffenden Rückenlehne, falls diese von einer zum Beispiel waagerechten in einer aufrechten Stellung zurückgeschwenkt werden soll.

In den **Patentansprüchen 7** bis **11** sind weitere vorteilhafte und erfinderische Ausführungsformen der Erfindung beschrieben.

Gemäß **Patentanspruch 12** besteht jedes Bremselement aus einem elastische Eigenschaften aufweisenden Elastomer, insbesondere Copolymer. Derartige Copolymere werden zum Beispiel von der Firma "DuPont" (eingetragene Marke dieses Unternehmens) unter der ebenfalls der Firma "DuPont" geschützten Marke "Hytrel" vertrieben. Derartige Polymere sind besonders für die Brems- und Dämpfungselemente geeignet, die zum Beispiel materialmäßig einstückig in einem für derartige Werkstoffe geeigneten Verfahren, zum Beispiel im Spritzgussverfahren, hergestellt werden, das sich für die Verarbeitung von derartigen thermoplastischen Polyester Elastomeren eignet.

In **Patentanspruch 13** ist eine Rotationsbremsvorrichtung beschrieben, bei welcher die Bremselemente aus einem Memory Eigenschaften aufweisenden Werkstoff bestehen.

### Die Lösung der Aufgabe betreffend die Verwendung einer Rotationsbremsvorrichtung

Diese Aufgabe wird durch die in **Patentanspruch 14** wiedergegebenen Merkmale gelöst.

### Einige Vorteile

Eine Rotationsbremsvorrichtung gemäß der Erfindung besteht aus einfachen Bauteilen, nämlich bevorzugt aus zwei diametral gegeneinander gegenüberliegend angeordneten Brems- und Dämpfungselementen aus einem geeigneten Polymer-Kunststoff, insbesondere Copolymer-Kunststoff oder einem Memory Eigenschaften aufweisenden Werkstoff, und einem Bauteil, das zwei um 180° versetzt zueinander in Bezug auf eine Rotationsachse angeordnete Brems- und Dämpfungshebel aufweist. Ein derartiges Bauteil kann auf einer Drehachse in einem Gehäuse angeordnet sein und wirkt einerseits mit den hakenförmigen Längenabschnitt der Brems- und Dämpfungselemente zusammen, andererseits stützen sich die Stirnseiten der Brems- und Dämpfungshebel an der Innenseite der Bremselemente ab, so dass zwischen diesen Bauteilen ebenfalls ein Kraftschluss hergestellt wird, der neben den federelastischen Eigenschaften der hakenförmigen Längenabschnitte der Brems- und Dämpfungselemente außerdem durch Kraftschluss Bremswirkung ausübt, wenn zum Beispiel ein schweres Bauteil, insbesondere eine Rückenlehne, von einer aufrechten Stellung in eine zum Beispiel waagerechte Lage geschwenkt werden soll.

In **Patentanspruch 15** ist eine vorteilhafte und erfinderische Ausführungsform beschrieben.

Weitere Merkmale und Vorteile ergeben sich aus der nachfolgenden Beschreibung der Zeichnung, in der die Erfindung, teils schematisch, an einem Ausführungsbeispiel veranschaulicht ist. Es zeigen:

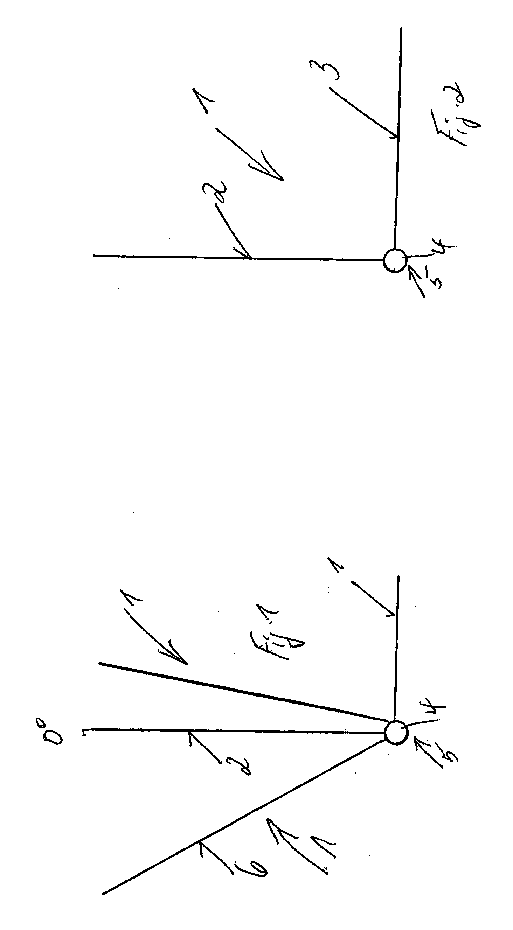

- Fig. 1: eine Rückenlehne eines Pkw in schematischer Seitenansicht, in verschiedenen angedeuteten Stellungen,
- Fig. 2: die aus Fig. 1 ersichtliche Rückenlehne in senkrechter und waagerechter Schwenkstellung,
- Fig. 3: eine Rotationsbremsvorrichtung gemäß der Erfindung,
- Fig. 4: ein hakenförmiges Bremselement in der Seitenansicht und
- Fig. 5: eine Stirnansicht des Bremselementes gemäß Fig. 4.

In der Zeichnung ist die Erfindung in Anwendung auf eine insgesamt mit dem Bezugszeichen 1 bezeichnete Rückenlehne eins Pkws veranschaulicht. Dabei soll das Bezugszeichen 2 die Rückenlehne in aufrechter Stellung und das Bezugszeichen 3 die Rückenlehne in waagerechter Schwenkstellung zeigen. Hierzu ist die Rückenlehne 1 um eine in Bezug auf den Fahrzeugboden horizontal verlaufende Achse 4 schwenkbeweglich angeordnet. Im Übrigen kann die Rückenlehne 1 in ihrer aufrechten Stellung in verschiedenen Winkelstellungen durch eine geeignete Verriegelungsvorrichtung arretiert werden (nicht dargestellt). Normalerweise fällt die Rückenlehne 1 beim Entriegeln und einer Schwenkbewegung nach vorne in ihre waagerechte Stellung 3 nach unten. Um das zu verhindern, ist der Achse 4 eine erfindungsgemäß ausgestaltete Rotationsbremsvorrichtung 5 raumsparend, bevorzugt koaxial zu der Welle 4, zugeordnet.

Das Bezugszeichen 6 zeigt die Rückenlehne 1 in einer etwas nach hinten geneigten arretierten Stellung.

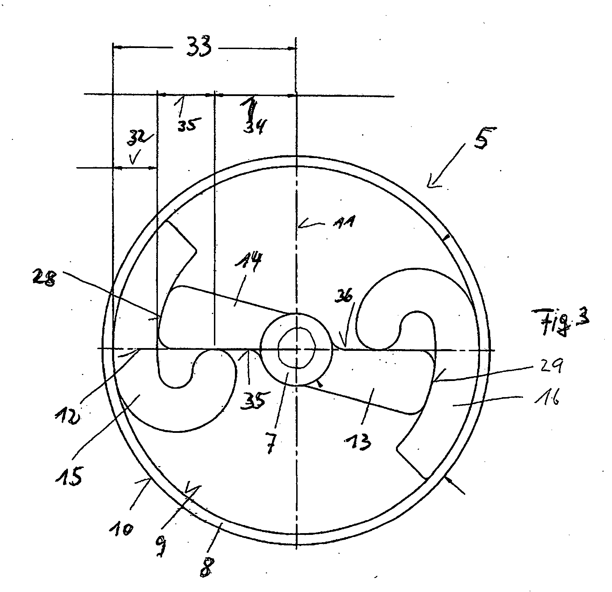

Wie Fig. 3 erkennen lässt, weist die Rotationsbremsvorrichtung 5 eine Achse 7 auf, die koaxial an einem Gehäuse 8 aus einem starren Material, bevorzugt aus Kunststoff, angeordnet ist. Das Gehäuse 8 ist bei der dargestellten Ausführungsform rohrförmig gestaltet, und innen und außen jeweils durch eine zylindrische Wand 9 bzw. 10 begrenzt. Die Achse 7 verläuft koaxial zu dem durch die beiden senkrecht aufeinander stehenden Mittellinien 11 und 12 definierten Kreismittelpunkt.

Die Achse 7 kann hülsenförmig gestaltet sein und kann hierdurch zum Beispiel der Achse 4 der Rückenlehne 1 koaxial und raumsparend zugeordnet sein. Der Außendurchmesser des Gehäuses 8 beträgt bei der dargestellten Ausführungsform 75 mm.

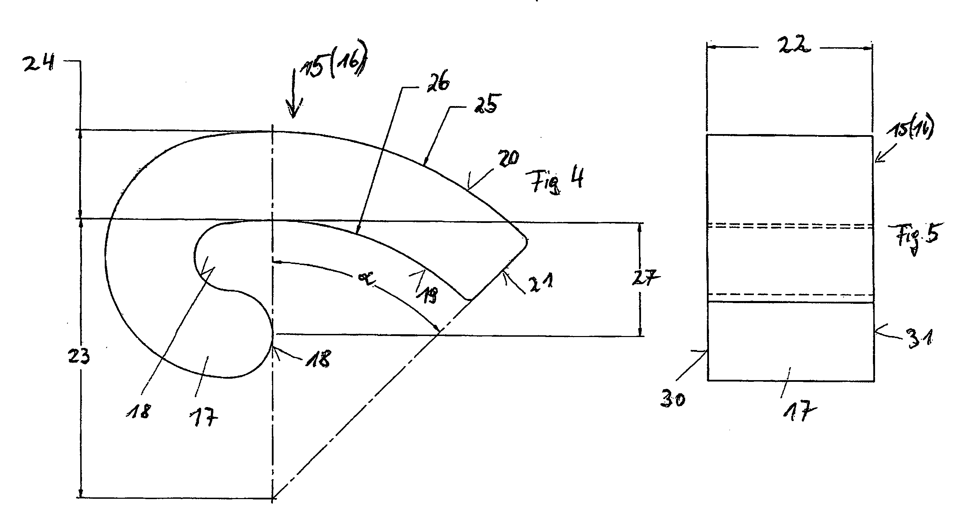

Mit der Achse 7, die einen Außendurchmesser von 14 mm aufweist, sind auf diametral einander gegenüberliegenden Seiten spiegelbildlich zwei Brems- und Dämpfungshebei 13 und 14, vorzugsweise materialmäßig oder funktionell einstückig, angeordnet, die mit je einem Brems- und Dämpfungselement 15 bzw. 16 zusammenwirken. Die Brems- und Dämpfungselemente 15 und 16 bestehen bei der dargestellten Ausführungsform aus einem federelastische Eigenschaften aufweisenden Elastromer, insbesondere einem thermoplastischen Polyester-Elastomer aus der Gruppe der Copolymere. Die Brems- und Dämpfelemente 15 und 16 sind bevorzugt materialmäßig einstückig gestaltet und sind jeweils gleich geformt und bestehen aus dem gleichen Werkstoff und besitzen demgemäß die gleichen festigkeits- und federelastischen Eigenschaften, so dass ihre Ausgestaltung im Hinblick auf Fig. 4 und 5 an einem Brems- und Dämpfungselement 15 und 16 beschrieben werden kann.

Wie aus Fig. 4 hervorgeht, weist jedes Brems- und Dämpfungselement 15, 16 einen hakenförmigen Längenabschnitt 17 auf, der an seinem freien Endabschnitt durch einen Kreisbogen 18 begrenzt ist. Die Innenseite des hakenförmigen Längenabschnittes 17 geht in einem relativ kleinen Radius 18 stark gekrümmt in eine Innenwand 19 über, die gleichmäßig zu einer Außenwand 20 verläuft. Die Innenwand 19 und die Außenwand 20 verlaufen nach je einem Kreisbogen.

Die Innenwand 19 und die Außenwand 20 sind an dem dem hakenförmigen Längenabschnitt 17 abgekehrten Endabschnitt durch eine Stirnseite 21 begrenzt, die rechtwinklig zur Innenwand 19 und zur Außenwand 20 verläuft. Die Stirnseite 21 geht durch Radien in die Innenwand 19 und die Außenwand 20 über. Die Dicke oder Breite des hakenförmigen Dämpfungs- und Bremselementes 15 und 16 ist mit 22 in Fig. 5 bezeichnet, und sie beträgt bei der dargestellten Ausführungsform 16 mm, während der Winkel α in Fig. 4 45° beträgt. Das Maß 23 in Fig. 4 beträgt 27 mm und das Maß 24 8,5 mm, während der Radius 25 der Außenseite 20 35,5 mm und der Radius 26 27 mm beim dargestellten Ausführungsbeispiel beträgt.

Das Maß 27 beträgt 11,1 mm und das Maß 22 in Fig. 5 16,0 mm. Die Wände 30 und 31 verlaufen parallel zueinander.

Wie aus Fig. 3 ersichtlich ist, untergreifen die beiden Brems- und Dämpfungshebel 13 und 14 jeweils den hakenförmigen Längenabschnitt 17 des zugeordneten Brems- und Dämpfungselementes 15 und 16, liegen in der Ausgangsstellung gegen den Radius 18 der Stirnseite des Brems- und Dämpfungselementes 15 und 16 an und berühren außerdem mit ihrer Stirnseite 28 bzw. 29 die jeweilige Innenseite 19 des zugeordneten Brems- und Dämpfungselementes 15 und 16, wirken also über diese Stirnseiten 28 und 29 kraftschlüssig mit den Stirnseiten 19 zusammen. Das Maß 32 beträgt 8,5 mm und das Maß 33 35,5 mm und das Maß 34 15,9 mm und das Maß 35 11,1 mm.

Bei einer Drehbewegung der Achse 7, die mit der Rückenlehne 1 funktionell einstückig verbunden ist, werden auch die Brems- und Dämpfungshebel 13 und 14 entsprechend gedreht und biegen bzw. strecken dadurch die hakenförmigen Längenabschnitte 17 der Brems- und Dämpfungselemente 15 und 16, was eine entsprechend federnde Brems- und Rückstellkraft über die Achse 7 und die Achse 4 und damit der Rückenlehne 1 zur Folge hat, wodurch die Gewichtskraft der Rückenlehne 1 beim Abwärtsschwenken über die aufrechte Position (0°) in die Position 3 bewirkt, dass die Rückenlehne 3 nicht mehr schlagartig herunterfallen kann, sondern sanft abgebremst, also verzögert, heruntergeschwenkt wird.

Wird sie in dieser Stellung arretiert und später die Arretierung gelöst, unterstützt die federnde Rückstellkraft der Brems- und Dämpfungselemente 15 und 16 das Aufwärtsschwenken des Rückenlehne 1, so dass sich diese leichter wieder in ihre aufrechte Sitzposition schwenken lässt.

Im Bedarfsfalle kann auch nur ein Brems- und Dämpfungselement, zum Beispiel 15, in dem Gehäuse 8 angeordnet werden.

Statt aus einem federelastische Eigenschaften aufweisenden Kunststoff bestehende Brems- und Dämpfungselemente 15 und 16 können auch solche materialmäßig oder funktionell einstückig ausgebildete Brems- und Dämpfungselemente aus einem Memory Eigenschaften aufweisenden Werkstoff verwendet werden, falls das für den jeweiligen Verwendungszweck vorteilhaft sein sollte.

Eine Rotationsbremsvorrichtung gemäß der Erfindung lässt sich auch für andere Anwendungsfälle einsetzen, überall dort, wo eine Rotationsbewegung abgebremst werden soll und wo es darauf ankommt, auf engstem Raum rotierende Massen in ihrer Bewegung zu bremsen und eine Bewegung entsprechend zu dämpfen.

Während aus Fig. 3 ersichtlich ist, dass die hakenförmigen Brems- und Dämpfelemente 15 und 16 mit ihren hakenförmigen Längsabschnitten in Drehrichtung einander entgegengesetzt sind, kann auch eine andere Einbaulage in Betracht kommen, insbesondere ist es möglich, zunächst einen Brems- und Dämpfungshebel mit einem derartigen Brems- und Dämpfelement zur Wirkung gelangen zu lassen, während erst nach einem gewissen Drehwinkel ein anderes Brems- und Dämpfungselement mit einem Brems- und Dämpfungshebel zur Wirkung gelangen kann. Bei der in Fig. 3 dargestellten Ausführungsform sind die hakenförmigen Längenabschnitte 17 der Brems- und Dämpfungselemente 15 und 16 so angeordnet, dass die Radien 18 ihrer Stirnseiten die waagerechte Mittelinie in der Zeichnung der Fig. 3 auf gegenüber liegenden Seiten tangieren.

Die Außenwand 20 jedes Brems- und Dämpfungselementes 15, 16 ist mit der Innenseite 9 des Gehäuses 8 funktionell einstückig, zum Beispiel durch Kleben, fest verbunden, so dass die Brems- und Dämpfungselemente 15 und 16 ortsunbeweglich im Gehäuse 8 angeordnet sind.

Die Patentansprüche definieren die Erfindung.

### Bezugszeichen

- 1: Rückenlehne
- 2: Position, aufrechte
- 3: Position, waagerechte
- 4: Achse
- 5: Rotationsbremsvorrichtung
- 6: Stellung, nach hinten geneigt
- 7: Achse
- 8: Gehäuse
- 9: Wand, innen
- 10: " , außen
- 11: Mittellinie
- 12: "
- 13: Brems- und Dämpfungshebel
- 14: " " "
- 15: Brems- und Dämpfungselement
- 16: " " "
- 17: Längenabschnitt, hakenförmiger
- 18: Radius, freie Stirnseite
- 19: Innenwand
- 20: Außenwand
- 21: Stirnseite
- 22: Dicke
- 23: Maß
- 24: "
- 25: Radius
- 26: "
- 27: Maß
- 28: Stirnseite
- 29: "
- 30: Wand
- 31: "
- 32: Maß
- 33: "
- 34: "
- 35: Seitenfläche
- 36: "

### Literaturverzeichnis

- DE: 20 2004 001 793.8
- DE: 20 2004 001 794.6

- DE: 102 54 375 C1
- DE: 201 07 426 U1
- DE: 202 16 262 U1
- DE: 203 02 120 U1
- DE: 203 02 121 U1
- DE: 203 11 217 U1

- JP: 2001 - 355666 (P2001-355666A)
- JP: 2002 - 242978 (P2002-242978A)
- JP: 2002 - 349622 A

- EP: 1 221 559 A2
- EP: 1 241 374 A1

- US: 6,578,832 B2

## Patentansprüche

1. Rotationsbremsvorrichtung mit einem zumindest innen im Querschnitt zylindrischen oder polygonförmigen Gehäuse aus einem starren Werkstoff, in welchem wenigstens ein hakenförmiges Brems- und Dämpfungselement (15, 16) aus einem federelastische Eigenschaften aufweisenden Material angeordnet ist, dessen hakenförmiger Längenabschnitt (17) zum Inneren des Gehäuses (8) hin gerichtet ist und dessen übriger Längenabschnitt ganz oder teilweise der Innenwand (9) des Gehäuses (8) zugeordnet ist, wobei der hakenförmige Längenabschnitt (17) von einem an einer im Gehäuse (8) angeordneten Achse (7) abragenden Brems- und Dämpfungshebel (13, 14) hintergriffen ist, der den hakenförmigen Längenabschnitt (17) bei einer gegen den Haken gerichteten Schwenkbewegung federelastisch verformt und weitgehend streckt.

2. Rotationsbremsvorrichtung nach Anspruch 1, **dadurch gekennzeichnet, dass** in dem Gehäuse (8) zwei hakenförmige Brems- und Dämpfungselemente (15, 16) etwa um 180° versetzt gegenüberliegend angeordnet sind, deren hakenförmige Längenabschnitte (17) gegeneinander und gegen die Achse (7) im Abstand zueinander und zu der Achse (7) angeordnet sind, und dass beide hakenförmige Längenabschnitte (17) von je einem Brems- und Dämpfungshebel (13, 14) hintergriffen sind, die jeweils die beiden hakenförmigen Längenabschnitte (17) bei einem gegen die hakenförmigen Längenabschnitte (17) gerichteten Schwenkbewegung federelastisch verformen und strecken.

3. Rotationsbremsvorrichtung nach Anspruch 1 oder 2, **dadurch gekennzeichnet, dass** die hakenförmigen Brems- und Dämpfungselemente (15, 16) an ihren der Innenwand (9) des Gehäuses (8) zugekehrten Seite auf einem großen Teil ihres Kreisbogens entsprechend der Innenseite (9) des Gehäuses (8) kurvenförmig verlaufend gestaltet sind, und dass auch der der Achse (7) zugekehrte Längenabschnitt des Brems- und Dämpfungselementes (15, 16) bis zum Übergangsbereich zu dem hakenförmigen Längenabschnitt (17) entsprechend der Innenwand (9) des Gehäuses (8) zugekehrten Oberflächenseite des Längenabschnitt verlaufend gestaltet sind und beide Längenabschnitte durch ein rechtwinklig zu diesen verlaufenden Stirnseite (21) miteinander verbunden sind, während der hakenförmige Längenabschnitt (17) jedes Brems- und Dämpfungselementes (15, 16) nach einem erheblich kleineren Radius (18) oder einer Kurvenschar gekrümmt von der Innenwandung (9) des Gehäuses (8) weg zur Innenseite (9) des Gehäuses (8) verlaufend ausgebildet ist, wobei der hakenförmige Längenabschnitt (17) an seinem freien Ende durch einen Kreisbogen (18) begrenzt ist.

4. Rotationsbremsvorrichtung nach Anspruch 1 oder einem der darauffolgenden Ansprüche, **dadurch gekennzeichnet, dass** das Gehäuse (8) auch an seiner Außenseite (10) zylindrisch verlaufend ausgebildet ist.

5. Rotationsbremsvorrichtung nach Anspruch 1 oder einem der darauffolgenden Ansprüche, **dadurch gekennzeichnet, dass** die Längsachse der Achse (7) koaxial zur Längsachse des Gehäuses (8) verläuft.

6. Rotationsbremsvorrichtung nach Anspruch 2 oder einem der darauffolgenden Ansprüche, **dadurch gekennzeichnet, dass** bei rechtwinklig sich im Mittelpunkt der Achse (7) schneidenden zwei Mittellinien (11, 12) die hakenförmigen Längenabschnitte (17) der diametral einander gegenüberliegenden Brems- und Dämpfungselemente (15, 16) mit ihren hakenförmigen Längenabschnitten (17) derart angeordnet sind, dass die durch einen Radius (18) abgerundeten freien Enden der hakenförmigen Längenabschnitte (17) einander entgegengerichtet sind und an derselben Mittellinie mit ihren Radien (18) tangieren, wobei die Brems- und Dämpfungshebel (13, 14) die Radien (18) der Brems- und Dämpfungselemente (15, 16) in der Ausgangsstellung (nicht Brems- oder Dämpfungsstellung) auf gegenüberliegenden Seiten die hier angeordneten Seitenflächen (35 bzw. 36) des jeweiligen Brems- und Dämpfungshebels (13, 14) berühren und gleichzeitig mit ihren der Innenseite (9) des Gehäuses (8) zugekehrten Stirnseiten (28) gegen die Innenwand (19) des sich an den hakenförmigen Längenabschnitten (17) anschließenden Längenabschnittes der Brems- und Dämpfungselemente (15, 16) kraftschlüssig anliegen.

7. Rotationsbremsvorrichtung nach Anspruch 6, **dadurch gekennzeichnet, dass** die freien Stirnseiten (18) der hakenförmigen Längenabschnitte (17) in einem Abstand von der Längsmittenachse der Achse (7) enden, der etwa der in dieser Richtung gemessenen Dicke des hakenförmigen Längenabschnittes (17) betreffenden Brems- und Dämpfungselemente (15, 16) oder etwas größer, entspricht.

8. Rotationsbremsvorrichtung nach Anspruch 1 oder einem der darauffolgenden Ansprüche, **dadurch gekennzeichnet, dass** sich der kreisbogenförmig verlaufende Längenabschnitt, der in den hakenförmigen Längenabschnitt (17) des Brems- und Dämpfungselementes (15, 16) übergeht, etwa über einen Umfangswinkel des Gehäuses von 35 bis 55°, vorzugsweise über einen Winkel (α) von 45°, erstreckt.

9. Rotationsbremsvorrichtung nach Anspruch 1 oder einem der darauffolgenden Ansprüche, **dadurch gekennzeichnet, dass** die radial zur Innenseite des Gehäuses (8) gemessene Dicke des hakenförmigen Brems- und Dämpfungselementes (15, 16) 3 bis 15 mm, vorzugsweise 5 bis 10 mm, insbesondere 8,5 mm, entspricht.

10. Rotationsbremsvorrichtung nach Anspruch 1 oder einem der darauffolgenden Ansprüche, **dadurch gekennzeichnet, dass** der Innenradius des Gehäuses (8) 25 bis 50 mm, vorzugsweise 28 bis 38 mm, insbesondere 35,5 mm, entspricht.

11. Rotationsbremsvorrichtung nach Anspruch 1 oder einem der darauffolgenden Ansprüche, **dadurch gekennzeichnet, dass** der Durchmesser der Achse (7) 10 bis 18 mm, vorzugsweise 14 mm, entspricht.

12. Rotationsbremsvorrichtung nach Anspruch 1 oder einem der darauffolgenden Ansprüche, **dadurch gekennzeichnet, dass** das Brems- und Dämpfungselement (15, 16) aus einem thermoplastischen Polymer-Kunststoff, zum Beispiel einem Copolymer hergestellt ist.

13. Rotationsbremsvorrichtung nach Anspruch 1, **dadurch gekennzeichnet, dass** das Brems- und Dämpfungselement (15, 16) aus einem Werkstoff mit Memory Eigenschaften hergestellt ist.

14. Verwendung einer Rotationsbremsvorrichtung nach Anspruch 1 in der Kfz-Industrie, **dadurch gekennzeichnet, dass** die Rotationsbremsvorrichtung einer auf- und niederklappbaren Rückenlehne (1) zugeordnet ist, die das Ablegen einer Rückenlehne (1) aus einer aufrechten Position in einer flacheren, insbesondere horizontalen oder annähernd horizontalen, Position abbremst.

15. Verwendung einer Rotationsbremsvorrichtung nach Anspruch 14, **dadurch gekennzeichnet, dass** die Rotationsbremse der Schwenkachse einer Rückenlehne (1) in einem Pkw zugeordnet ist.

## Claims

1. Rotary-brake device with a housing of rigid material which is polygonal in shape or has, at least in the interior, a cylindrical cross section, in which at least one hook-shaped braking and damping element (15, 16) made of a material with elastic characteristics is arranged, whose hook-shaped longitudinal section (17) is aligned towards the interior of the housing (8) and whose remaining longitudinal section is assigned wholly or partially to the inside wall (9) of the housing (8), where a braking and damping lever (13, 14) projecting downwards from an axle (7) arranged in the housing hooks behind the hook-shaped longitudinal section (17), which braking and damping lever (13, 14) elastically deforms and substantially stretches the hook-shaped longitudinal section (17) during a pivoting movement opposed to the hook.

2. Rotary-brake device in accordance with claim 1, **characterised in that** two hook-shaped braking and damping elements (15, 16) are arranged in the housing (8) opposite one another offset by approximately 180°, whose hook-shaped longitudinal sections (17) are arranged against one another and against the axle (7) at a distance from one another and from the axle (7), and that both a braking and a damping lever (13, 14) hook behind the two hook-shaped longitudinal sections (17), which braking and damping levers (13, 14) elastically deform and stretch the two hook-shaped longitudinal sections (17) during a pivoting movement opposed to the hook-shaped longitudinal sections (17).

3. Rotary-brake device in accordance with claim 1 or claim 2, **characterised in that**, on their side facing the inner wall (9) of the housing (8), the hook-shaped braking and damping elements (15, 16) run in a curve corresponding to the inside (9) of the housing (8) over a large part of their arc, and that, up to the transition area to the hook-shaped longitudinal section (17), the longitudinal section of the braking and damping elements (15, 16) facing the axle (7) are also shaped to correspond to the surface side of the longitudinal section facing the inside wall (9) of the housing (8), and both longitudinal sections are joined to one another by a front side (21) running at right-angles to these, while the hook-shaped longitudinal section (17) of each braking and damping element (15, 16) is bent to extend away from the inner wall (9) of the housing (8) to the inner side (9) of the housing (8) at a considerably smaller radius (18) or group of curves, where the hook-shaped longitudinal section (17) is delimited by the arc of a circle (18) at its free end.

4. Rotary-brake device in accordance with claim 1 or any of the subsequent claims, **characterised in that** the housing (8) is also formed cylindrically on its outside.

5. Rotary-brake device in accordance with claim 1 or any of the subsequent claims, **characterised in that** the longitudinal axis of the axle (7) extends coaxially to the longitudinal axis of the housing (8).

6. Rotary-brake device in accordance with claim 2 or any of the subsequent claims, **characterised in that** when two centre lines (11, 12) intersect one another at right angles at the centre point of the axle (7), the hook-shaped longitudinal sections (17) of the diametrically opposing braking and damping element (15, 16) are arranged in such a way that the free ends of the hook-shaped longitudinal sections (17) rounded off by a radius (18) are aligned towards one another and their radii (18) touch one another on the same centre line, where in the starting position (non-braking and non-damping position) the braking and damping levers (13, 14) the radii (18) of the braking and damping elements (15, 16) touch the side surfaces (35 and 36) thus arranged of each of the braking and damping levers (13, 14) on opposing sides and, at the same time, their front sides (28) facing the inner side (9) of the housing (8) lie non-positively against the inner wall (19) of the longitudinal section of the braking and damping elements (15, 16) adjoining the hook-shaped longitudinal sections (17).

7. Rotary-brake device in accordance with claim 6, **characterised in that** the free front sides (18) of the hook-shaped longitudinal sections (17) end at a distance from the longitudinal centre axis of the axle (7) which corresponds approximately to the thickness of the braking and damping elements (15, 16) affecting the hook-shaped longitudinal sections (17) when measured in this direction, or is slightly larger.

8. Rotary-brake device in accordance with claim 1 or any of the subsequent claims, **characterised in that** the arc-shaped longitudinal section which blends into the hook-shaped longitudinal section (17) of the braking and damping element (15, 16), extends approximately over a circumference angle of the housing of 35 to 55°, preferably over an angle (α) of 45°.

9. Rotary-brake device in accordance with claim 1 or any of the subsequent claims, **characterised in that** the thickness of the hook-shaped braking and damping element (15, 16) measured radially to the inner side of the housing (8) is between 3 and 15 mm, preferably between 5 and 10 mm, and specifically 8,5 mm.

10. Rotary-brake device in accordance with claim 1 or any of the subsequent claims, **characterised in that** the inner radius of the housing (8) is between 25 and 50 mm, preferably between 28 and 38 mm, and specifically 35,5 mm.

11. Rotary-brake device in accordance with claim 1 or any of the subsequent claims, **characterised in that** the diameter of the axle (7) is between 10 and 18 mm, and preferably 14 mm.

12. Rotary-brake device in accordance with claim 1 or any of the subsequent claims, **characterised in that** the braking and damping element (15, 16) is made of thermoplastic polymer plastic, for example a copolymer.

13. Rotary-brake device in accordance with claim 1, **characterised in that** the braking and damping element (15, 16) is made of a material with memory characteristics.

14. Application of a rotary-brake device in accordance with claim 1 in the automotive industry, **characterised in that** the rotary-brake device is assigned to a movable back rest (1) where it brakes or damps the lowering of the back rest (1) from an upright position into a reclining position, or more specifically into a horizontal or approximately horizontal position.

15. Application of a rotary-brake device in accordance with claim 14, **characterised in that** the rotary brake is assigned to the pivoting axis of a back rest (1) in a saloon car.

## Revendications

1. Dispositif de freinage de rotation comprenant un carter en matériau rigide présentant au moins à l'intérieur une section cylindrique ou polygonale, matériau dans lequel est agencé au moins un élément de freinage et d'amortissement (15, 16) en forme de crochet réalisé dans un matériau présentant les propriétés élastiques d'un ressort, dont le segment longitudinal en forme de crochet (17) regarde en direction de l'intérieur du carter (8) et dont le reste du segment longitudinal est affecté entièrement ou en partie à la paroi intérieure (9) du carter (8), sachant que le segment longitudinal (17) en forme de crochet est saisi par derrière par un levier de freinage et d'amortissement (13, 14) faisant saillie au niveau d'un axe (7) agencé dans le carter (8), levier qui, lorsque est exercé un mouvement pivotant dirigé contre le crochet, déforme le segment longitudinal (17) en forme de crochet et l'étire largement.

2. Dispositif de freinage de rotation selon la revendication 1, **caractérisé en ce que** dans le carter (8), deux éléments de freinage et d'amortissement (15, 16) en forme de crochet sont agencés l'un en face de l'autre décalés d'environ 180°, éléments dont les segments longitudinaux (17) en forme de crochet sont agencés en antagonisme réciproque et en antagonisme avec l'axe (7), à distance les uns des autres et de l'axe (7), et **en ce que** les deux segments longitudinaux (17) en forme de crochet sont saisis par derrière par des leviers respectifs de freinage et d'atténuation (13, 14) qui déforment et étirent respectivement les deux segments longitudinaux (17) en forme de crochet lors de mouvements de pivotement dirigés contre les segments longitudinaux (17) en forme de crochet.

3. Dispositif de freinage selon la revendication 1 ou 2, **caractérisé en ce que** les éléments de freinage et d'amortissement (15, 16) en forme de crochet sont configurés selon un tracé curviligne sur leur côté regardant la paroi intérieure (9) du carter (8), sur une grande partie de leur arc de cercle, conformément au côté intérieur (9) du carter (8), et **en ce qu'**aussi le segment longitudinal - regardant l'axe (7) - de l'élément de freinage et d'amortissement (15, 16) est configuré, jusqu'à la zone de transition vers le segment longitudinal (17) en forme de crochet, avec un tracé correspondant à la surface du segment longitudinal regardant la paroi intérieure (9) du carter (8), et que les deux segments longitudinaux sont reliés entre eux par un côté frontal (21) présentant un tracé perpendiculaire à ceux-ci,
tandis que le segment longitudinal (17) en forme de crochet de chaque élément de freinage et d'amortissement (15, 16) est configuré selon un tracé coudé présentant un rayon (18) considérablement plus petit ou selon une famille de courbes allant de la paroi intérieure (9) du carter (8) en direction du côté intérieur (9) du carter (8), sachant que le segment longitudinal (17) en forme de crochet est limité en son extrémité libre par un arc de cercle (18).

4. Dispositif de freinage de rotation selon la revendication 1 ou l'une des revendications suivantes, **caractérisé en ce que** le côté extérieur (10) du carter (8) présente lui aussi un tracé cylindrique.

5. Dispositif de freinage de rotation selon la revendication 1 ou l'une des revendications suivantes, **caractérisé en ce que** l'axe longitudinal de l'axe (7) présente un tracé coaxial à l'axe longitudinal du carter (8).

6. Dispositif de freinage de rotation selon la revendication 2 ou l'une des revendications suivantes, **caractérisé en ce que** pour deux lignes médianes (11, 12) se coupant perpendiculairement au centre de l'axe (7), les segments longitudinaux (17) en forme de crochet composant les éléments d'amortissement et de freinage (15, 16) se faisant diamétralement face sont agencés de telle manière que les extrémités libres des segments longitudinaux (17) en forme de crochet arrondis selon un rayon (18) sont dirigées l'une opposée de l'autre et touchent la même ligne médiane par leur rayon (18), sachant que les leviers de freinage et d'amortissement (13, 14) touchent les rayons (18) des éléments de freinage et d'amortissement (15, 16) en position de départ (pas en position de freinage ou d'amortissement) sur des côtés opposés, les surfaces latérales (35 et 36) agencées ici du levier de freinage et d'amortissement (13, 14) respectif, et que simultanément, par leurs côtés frontaux (28) tournés vers le côté intérieur (9) du carter (8), ils appliquent par adhérence de force contre la paroi intérieure (19) du segment longitudinal (17) que comporte les éléments de freinage et d'amortissement (15, 16), segment qui se situe dans le prolongement des segments longitudinaux (17) en forme de crochet.

7. Dispositif de freinage de rotation selon la revendication 6, **caractérisé en ce que** les côtés frontaux libres (18) des segments longitudinaux (17) en forme de crochet se terminent à une distance de l'axe longitudinal médian de l'axe (7) qui correspond approximativement à l'épaisseur mesurée, dans cette direction, du segment longitudinal (17) en forme de crochet des éléments de freinage et d'amortissement (15, 16) concernés, ou à une distance un peu plus importante.

8. Dispositif de freinage de rotation selon la revendication 1 ou l'une des revendications suivantes, **caractérisé en ce que** le segment longitudinal à tracé en arc de cercle, qui devient le segment longitudinal (17) en forme de crochet de l'élément de freinage et d'amortissement (15, 16), s'étend selon un angle inscrit du carter compris entre 35 et 55°, de préférence selon un angle (α) de 45°.

9. Dispositif de freinage de rotation selon la revendication 1 ou l'une des revendications suivantes, **caractérisé en ce que** l'épaisseur - de l'élément de freinage et d'amortissement (15, 16) en forme de crochet - mesurée radialement par rapport au côté intérieur du carter (8) est comprise entre 3 et 15 mm, de préférence entre 5 et 10 mm, et qu'elle s'élève en particulier à 8,5 mm.

10. Dispositif de freinage de rotation selon la revendication 1 ou l'une des revendications suivantes, **caractérisé en ce que** le rayon intérieur du carter (8) est compris entre 25 et 50 mm, de préférence entre 28 et 38 mm, et qu'il est en particulier de 35,5 mm.

11. Dispositif de freinage de rotation selon la revendication 1 ou l'une des revendications suivantes, **caractérisé en ce que** le diamètre de l'axe (7) est compris entre 10 et 18 mm et qu'il s'élève de préférence à 14 mm.

12. Dispositif de freinage de rotation selon la revendication 1 ou l'une des revendications suivantes, **caractérisé en ce que** l'élément de freinage et d'amortissement (15, 16) est fabriqué à partir d'un polymère synthétique thermoplastique, par exemple d'un copolymère.

13. Dispositif de freinage de rotation selon la revendication 1, **caractérisé en ce que** l'élément de freinage et d'amortissement (15, 16) est fabriqué dans un matériau présentant des propriétés de mémoire.

14. Utilisation d'un dispositif de freinage de rotation selon la revendication 1 dans l'industrie automobile, **caractérisée en ce que** le dispositif de freinage de rotation est affecté à un dossier (1) rabattable vers le haut et le bas et qui freine l'arrivée d'un dossier (1) de sa position redressée vers une position plus aplatie, en particulier horizontale ou approximativement horizontale.

15. Utilisation d'un dispositif de freinage de rotation selon la revendication 14, **caractérisé en ce que** le frein de rotation de l'axe de pivotement est affecté au dossier (1) d'une voiture particulière.
